# FASCICULE DE BREVET EUROPEEN

(11) **EP 1 926 653 B1**
(45) Date de publication et mention de la délivrance du brevet: **06.01.2010**
(21) Numéro de dépôt: 06831190.1
(22) Date de dépôt: 18.09.2006
(51) Int. Cl.: B62D 5/04

(54) **PROCEDE DE COMMANDE D'UN MOTEUR ELECTRIQUE D'UN DISPOSITIF D'ASSISTANCE DE DIRECTION DE VEHICULE, ET DISPOSITIF D'ASSISTANCE ASSOCIE**
VORRICHTUNG ZUR STEUERUNG EINES ELEKTROMOTORS EINER SERVOLENKVORRICHTUNG EINES FAHRZEUGES UND ZUGEHÖRIGE SERVOLENKVORRICHTUNG
METHOD FOR CONTROLLING AN ELECTRICAL MOTOR OF A VEHICLE POWER STEERING DEVICE, AND RELATED POWER STEERING DEVICE

(30) Priorité: 20.09.2005 FR 0509599
(43) Date de publication de la demande: 04.06.2008
(73) Titulaire: PEUGEOT CITROËN AUTOMOBILES S.A., 78140 Vélizy Villacoublay (FR)
(72) Inventeur: BERNEDE, Dominique, F-92190 Meudon (FR); GEORGELIN, Vivian, F-78120 Rambouillet (FR)
(86) Numéro de dépôt international: PCT/FR2006/050901
(87) Numéro de publication internationale: WO 2007/034108

(56) Documents cités:
- EP-A- 1 291 262
- FR-A- 2 832 376
- US-A- 6 131 693

## Description

L'invention se rapporte à un procédé de commande d'un moteur électrique d'un dispositif d'assistance électrique de direction de véhicule automobile, le moteur étant prévu pour fournir un couple d'assistance au braquage.

Elle concerne plus précisément un procédé dans lequel, à chaque instant:
- on calcule une valeur de consigne motrice en fonction d'un premier ensemble de paramètres de fonctionnement et/ou d'état du véhicule,
- on calcule une valeur de consigne d'amortissement en fonction d'un deuxième ensemble de paramètres de fonctionnement et/ou d'état du véhicule, et
- on calcule une valeur de consigne de couple d'assistance résultant de la valeur de consigne motrice et de la valeur de consigne d'amortissement
- on détermine de façon séquentielle le mode de fonctionnement de la direction parmi un mode de fonctionnement normal et un mode de fonctionnement en pendulage, et on calcule la valeur de consigne d'amortissement (C_) à chaque instant, en fonction du mode déterminé, sélectivement au moyen de premières lois pré-enregistrées ou de secondes lois pré-enregistrées distinctes des premières.

La demande de brevet français n° 02.12 488, par exemple, décrit un procédé de commande connu de ce type.

Un tel procédé permet de délivrer une consigne de couple d'assistance qui soit adaptée à des cas de pendulage aussi bien qu'à des conditions de volant tenu, en préservant un niveau optimal de sécurité et d'agrément de conduite.

On rappelle qu'une situation de pendulage se produit lorsque, à partir d'une trajectoire en ligne droite à vitesse relativement élevée, le volant de direction est lancé de façon brusque dans un sens ou dans l'autre à partir de sa position neutre, puis lâché. Cette situation se produit par exemple lors d'une manoeuvre brusque d'évitement.

Le comportement naturel du véhicule, en l'absence de direction assistée, consiste à décrire des oscillations amorties autour de sa trajectoire rectiligne initiale.

Il est impératif que le dispositif d'assistance électrique ne rende pas le comportement du véhicule divergent par rapport à sa trajectoire initiale rectiligne. Il est en outre souhaitable que le nombre d'oscillations, avant stabilisation sur la trajectoire initiale, soit faible.

La première condition ci-dessus est remplie dans les systèmes de direction assistée électrique les plus performants, tel que celui décrit dans FR 02.12 488 publiée comme FR 2 832 376.

L'invention a pour but d'optimiser les performances de la direction assistée liées à la deuxième condition, par l'élaboration d'un procédé de commande qui permette de stabiliser rapidement le véhicule sur sa trajectoire initiale précédant la manoeuvre d'évitement.

A cet effet, l'invention a pour objet un procédé de commande du type précité, dans lequel
- on détermine le mode de fonctionnement de la direction en observant l'évolution avec le temps d'un paramètre P₃ significatif de la vitesse-volant, d'un paramètre P₁ significatif du couple-volant, de la dérivée temporelle de ce dernier, et d'un paramètre P₂ significatif de la vitesse du véhicule.
**Suivant d'autres caractéristiques, optionnelles, du procédé de l'invention** :
- on détermine que le mode de fonctionnement est par défaut le mode de fonctionnement normal, et qu'il est le mode de fonctionnement en pendulage pour une durée prédéterminée, dès lors qu'une fonction de détection de pendulage et activée, et que la séquence suivante d'événements est observée :
   a) la valeur du paramètre significatif de la vitesse-volant, est à un premier instant, en valeur absolue, supérieure à une première valeur de seuil prédéterminée,
   b) la valeur du paramètre significatif de la vitesse-volant devient, à un deuxième instant postérieur au premier instant, en valeur absolue, inférieure à une deuxième valeur de seuil prédéterminée,
   c) à un troisième instant, dans un premier temps prédéterminé à partir du deuxième instant, la valeur du paramètre significatif de la vitesse-volant devient, en valeur absolue, supérieure à une troisième valeur de seuil prédéterminée, et de signe différent de celui du même paramètre au premier instant, et
   d) après une attente prédéterminée, à un quatrième instant dans un deuxième temps prédéterminé à partir de la fin de ladite attente, les conditions suivantes sont toutes remplies :
- la valeur absolue du paramètre significatif du couple-volant est inférieure à une quatrième valeur de seuil prédéterminée,
- la valeur absolue de la dérivée temporelle du paramètre P₁ significatif du couple-volant est inférieure à une cinquième valeur de seuil prédéterminée, et
- la valeur du paramètre significatif de la vitesse du véhicule est supérieure à une sixième valeur de seuil prédéterminée.

L'invention a également pour objet un dispositif d'assistance électrique de direction de véhicule automobile, comprenant un moteur électrique prévu pour fournir un couple d'assistance au braquage, et un dispositif de commande prévu pour délivrer au moteur un signal de consigne de couple d'assistance résultant d'une valeur de consigne motrice et d'une valeur de consigne d'amortissement, ledit dispositif de commande comportant
- des moyens principaux de calcul qui calculent à chaque instant la valeur de consigne motrice en fonction d'un premier ensemble de paramètres de fonctionnement et/ou d'état du véhicule, et
- des moyens secondaires de calcul qui calculent à chaque instant la valeur de consigne d'amortissement en fonction d' un deuxième ensemble de paramètres de fonctionnement et/ou d'état du véhicule,
- des premiers et des seconds moyens de calcul de la valeur de consigne d'amortissement, associés respectivement à un mode de fonctionnement normal et à un mode de fonctionnement en pendulage de la direction, et pouvant être activés de façon sélective pour calculer et délivrer ladite valeur de consigne d'amortissement, et
- des moyens de sélection, adaptés pour déterminer de façon séquentielle le mode de fonctionnement de la direction parmi le mode de fonctionnement normal et le mode de fonctionnement en pendulage, et pour activer à chaque instant, en fonction du mode déterminé, sélectivement les premiers ou les seconds moyens de calcul,
**caractérisé en ce que :**
le deuxième ensemble de paramètres comprend un paramètre significatif de la vitesse-volant, un paramètre significatif du couple-volant, **un paramètre significatif de la dérivée temporelle de ce dernier** et un paramètre significatif de la vitesse du véhicule.

Un mode particulier de réalisation de l'invention va maintenant être décrit plus en détail en référence aux dessins annexés, sur lesquels :
- la Figure 1 est une vue schématique d'un ensemble de direction de véhicule, comportant un dispositif d'assistance électrique suivant l'invention ;
- la Figure 2 est un schéma de fonctionnement du dispositif de commande de la Figure 1, représentatif d'un procédé conforme à l'invention ;
- la Figure 3 est un schéma de fonctionnement des moyens secondaires de calcul de la Figure 2 ; et
- la Figure 4 est un schéma logique, illustrant plus précisément la détermination séquentielle du mode de fonctionnement de la direction dans un procédé conforme à l'invention.

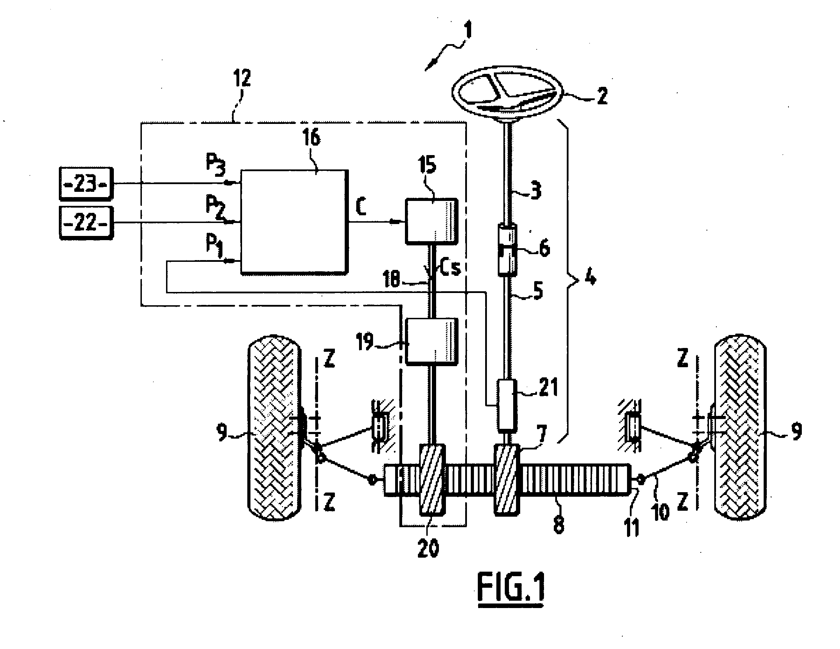

A la Figure 1, on a représenté un ensemble de direction 1 de véhicule automobile assisté électriquement, qui comporte un volant 2 solidaire d'un premier tronçon 3 d'un arbre de direction 4, par l'intermédiaire d'une liaison à cardan 6. L'arbre de direction 4 transmet le couple appliqué sur le volant 2 par le conducteur du véhicule à un pignon de transmission 7, qui engrène avec une crémaillère 8 disposée transversalement par rapport à l'axe du véhicule entre deux roues directrices 9. Le pignon de transmission 7 pourrait être remplacé par tout autre organe de transmission, comme par exemple une vis sans fin. Chaque roue directrice 9 est susceptible de pivoter autour d'un axe de pivotement vertical Z-Z sous l'effet d'un déplacement linéaire de la crémaillère 8, ladite roue directrice 9 étant actionnée par un mécanisme d'orientation comportant une biellette 10 reliée à une extrémité 11 de la crémaillère 8.

L'ensemble de direction 1 comprend également un dispositif d'assistance 12 destiné à exercer sur la crémaillère 8 un effort de même sens que l'effort exercé par le pignon de transmission 7, de façon à faciliter l'actionnement du volant 2 par le conducteur du véhicule, en fonction de trois paramètres P₁, P₂, P₃ de fonctionnement de la direction, ou plus généralement de fonctionnement et/ou d'état du véhicule.

Le dispositif d'assistance 12 comprend un moteur électrique 15 dont le couple de sortie Cₛ est commandé par un dispositif électronique de commande 16 qui délivre au moteur une consigne de couple d'assistance C. Le couple de sortie Cₛ du moteur électrique 15 est transmis à un réducteur 19 par l'intermédiaire de l'arbre de sortie 18 du moteur 15, et à un pignon d'assistance 20 engrenant avec la crémaillère 8.

Ainsi, l'arbre de sortie 18 du moteur électrique 15 est relié mécaniquement à l'arbre de direction 4, par l'intermédiaire du réducteur 19, du pignon d'assistance 20, de la crémaillère 8 et du pignon de transmission 7. La liaison mécanique de l'arbre de sortie 18 et de l'arbre de direction 4 pourrait être différente, notamment plus directe en n'impliquant pas la crémaillère 8.

L'arbre de sortie 18 du moteur électrique fournit une assistance au braquage du volant 2 en exerçant sur l'arbre de direction 4, par l'intermédiaire des éléments mécaniques cités précédemment, un couple d'assistance dépendant directement du couple de sortie Cₛ, et par conséquent de la consigne de couple d'assistance C.

Le premier paramètre P₁ est significatif du couple-volant c'est-à-dire du couple appliqué sur le volant 2 par le conducteur. Le couple-volant est par exemple estimé au moyen d'un capteur de couple 21, monté sur le deuxième tronçon 5 de l'arbre de direction 4, dans une région proche du pignon 7. Ce paramètre est significatif de conditions de maintien du volant.

Par la suite, la dérivée temporelle de ce premier paramètre P₁ sera notée « P'₁ ».

Le deuxième paramètre P₂ est significatif de la valeur de vitesse du véhicule. Celle-ci est déterminée par des moyens classiques de mesure de la vitesse d'avance, présents usuellement sur les véhicules, que l'on désignera par un capteur de vitesse d'avance 22.

Le troisième paramètre P₃ est significatif de la vitesse-volant, c'est-à-dire la vitesse de rotation du volant 2 mesurée ou estimée à partir des données fournies par un capteur 23. Ce paramètre peut être mesuré au moyen d'un capteur disposé sur l'arbre de direction 4, ou estimé à partir de la vitesse du moteur, mesurée sur l'arbre de sortie 18.

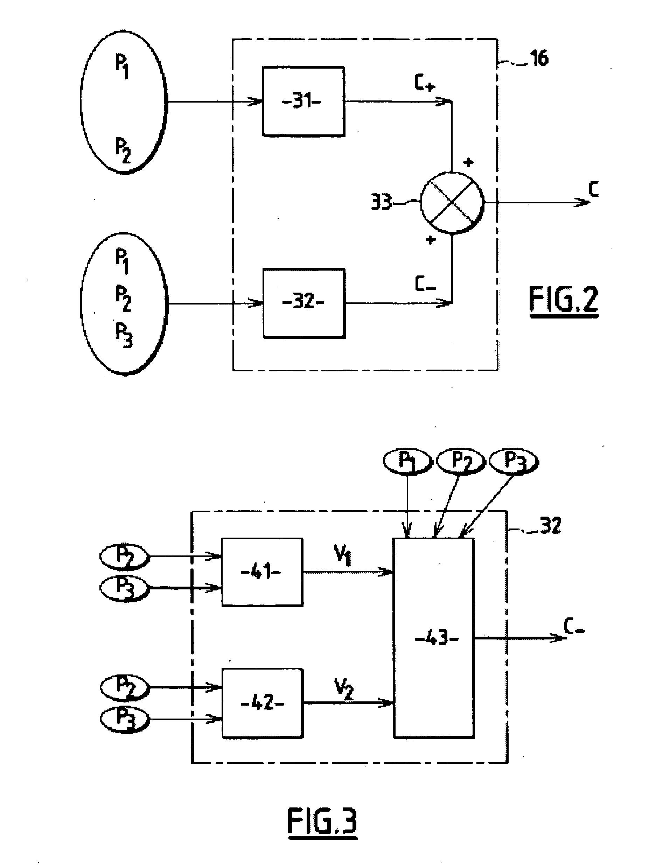

Comme représenté sur la Figure 2, le dispositif électronique de commande 16 comporte des moyens principaux de calcul 31, qui calculent à chaque instant une valeur de consigne motrice C₊, en fonction d'un premier ensemble de paramètres P₁, P₂ parmi les paramètres précités.

Le dispositif électronique de commande 16 comprend de plus des moyens secondaires de calcul 32, qui calculent à chaque instant une valeur de consigne d'amortissement C₋, en fonction d'un deuxième ensemble de paramètres P₁, P₂, P₃ parmi les paramètres de fonctionnement précités.

D'autre part, le dispositif 16 comprend un sommateur 33, qui réalise à chaque instant la somme de la valeur de consigne motrice C₊ et de la valeur de consigne d'amortissement C₋. La valeur ainsi obtenue est la valeur de consigne de couple d'assistance C.

Comme représenté sur la Figure 3, les moyens secondaires de calcul 32 comprennent des premiers moyens de calcul 41, tels qu'une cartographie à deux entrées, recevant en entrée les valeurs des paramètres P₂ et P₃. Ces premiers moyens de calcul 41 sont associés à un mode de fonctionnement normal de la direction, et calculent à partir des valeurs des deux paramètres d'entrée P₂, P₃ une valeur V₁ de la consigne d'amortissement C₋, au moyen de premières lois pré-enregistrées.

Les moyens secondaires de calcul 32 comprennent d'autre part des seconds moyens de calcul 42, associés à un mode de fonctionnement en pendulage de la direction. Ces seconds moyens de calcul 42, tels qu'une cartographie à deux entrées, reçoivent en entrée les valeurs des deux paramètres P₂, P₃, et calculent une deuxième valeur V₂ de la consigne d'amortissement C_, au moyen de deuxièmes lois pré-enregistrées distinctes des premières lois.

Les moyens secondaires de calcul 32 comprennent en outre des moyens de sélection 43, qui déterminent de façon séquentielle le mode de fonctionnement de la direction parmi le mode de fonctionnement normal et le mode de fonctionnement en pendulage, en fonction de l'évolution au cours du temps des trois paramètres P₁, P₂, P₃ qu'ils reçoivent en entrée.

Les moyens de sélection 43 reçoivent en entrée les deux valeurs V₁ et V₂ et délivrent en sortie la valeur de consigne d'amortissement C₋, laquelle est égale à la valeur V₁ si le mode de fonctionnement déterminé est le mode normal, ou égale à la valeur V₂ si le mode de fonctionnement déterminé est le mode en pendulage.

On notera que les deux valeurs V₁ et V₂ peuvent être calculées à chaque instant, respectivement par les premiers et les seconds moyens de calcul. Dans une autre forme de réalisation, les moyens de calcul 41 ou 42 correspondant au mode détecté de fonctionnement de la direction peuvent être sélectivement sollicités pour effectuer le calcul de la valeur v₁ ou V₂ de consigne correspondante.

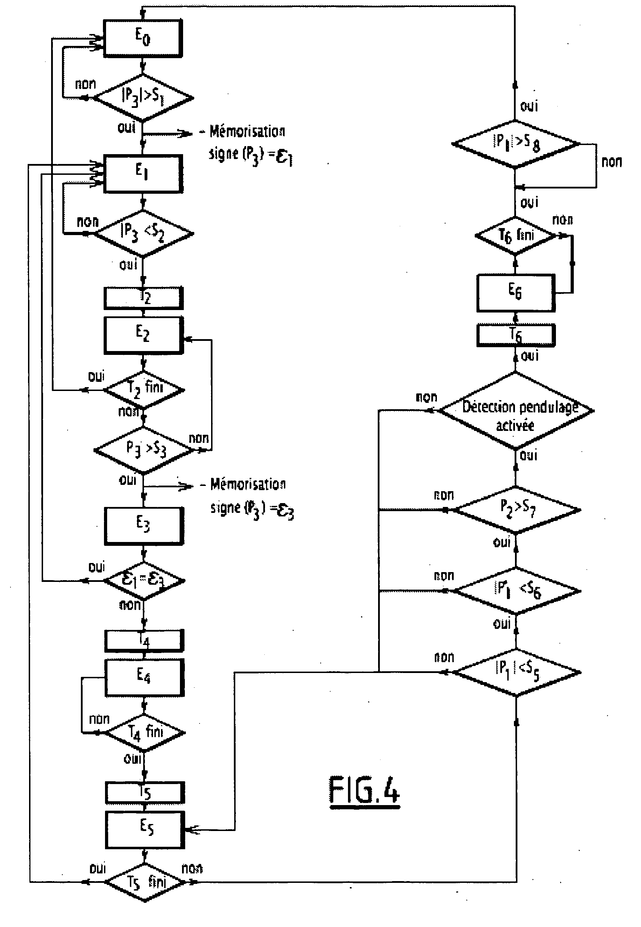

On se réfère à présent à la Figure 4 pour expliciter la partie du procédé de commande permettant de déterminer le mode de fonctionnement de la direction.

Le principe de détection de pendulage selon le procédé de l'invention repose sur le fait qu'une situation de pendulage peut être modélisée par une vitesse-volant élevée, suivie d'un passage à une vitesse-volant nulle, suivi d'une vitesse-volant élevée avec changement de signe de la vitesse-volant, puis couple-volant et dérivée temporelle du couple-volant faibles, avec vitesse du véhicule élevée.

La Figure 4 consiste en un schéma logique représentatif du procédé, et fait apparaître une séquence de sept états E₀ à E₆ du processus de détermination. Chaque état Eᵢ (0 ≤ i ≤ 6) est figuré par une case.

Chaque arrivée ou retour dans une case figurant un état Eᵢ se traduit par le passage d'un instant t à un instant t+δt, où δt représente une durée élémentaire (ou temps d'horloge).

Dans le procédé, à chaque instant, un état et un seul est actif (tous les autres états étant inactifs). Le passage d'un état initial à un état ultérieur rend l'état ultérieur actif et tous les autres états, en particulier l'état initial, inactifs.

Dans les états E₀ à E₅, le mode de fonctionnement de la direction qui est déterminé est le mode de fonctionnement normal, alors que dans l'état E₆, le mode de fonctionnement déterminé est le mode de fonctionnement en pendulage.

En d'autres termes, le mode de fonctionnement par défaut est le mode de fonctionnement normal, et ce mode de fonctionnement déterminé passe au mode de fonctionnement en pendulage dès lors que l'état E₆ est atteint, lorsque la séquence d'événements décrite ci-après est observée.

Au début du processus de détermination, à l'état initial E₀, on estime la vitesse-volant P_{3.}

Si la valeur absolue de P₃ est supérieure à une première valeur de seuil prédéterminée, alors on mémorise le signe ε₁ de P₃, et on passe à l'état E₁. Sinon, on retourne à l'état E₀.

A l'état E₁, on mesure la vitesse-volant P₃.

Si la valeur absolue de la vitesse volant P₃ est inférieure à une deuxième valeur de seuil prédéterminée S₂, on démarre un comptage de temps T₂, et on passe à l'état E₂. Sinon on retourne à l'état E₁.

A l'état E₂, on mesure la vitesse-volant P₃.

Si le temps T₂ a fini de s'écouler, on retourne à l'état E₀.

Sinon, on compare la valeur absolue de P₃ avec une troisième valeur de seuil prédéterminée S₃.

Si la valeur absolue de P₃ est supérieure à S₃, on mémorise le signe ε₃ de la vitesse-volant P₃ et on passe à l'état E₃.

Sinon, on retourne à l'état E₂.

A partir de l'état E₃, on compare les signes ε₁ et ε₃. Si ε₁ = ε₃, on retourne à l'état E₁. Sinon, on démarre le comptage d'un temps T₄, et on passe à l'état E₄.

A partir de l'état E₄, si le temps T₄ a fini de s'écouler, on démarre le comptage d'un temps T₅ et on passe à l'état E₅. Sinon, on retourne à l'état E₄.

A l'état E₅, on mesure la vitesse du véhicule P₂, on mesure le couple-volant P₁, on calcule la dérivée temporelle P'₁ de ce couple-volant P₁.

Si le temps T₅ a fini de s'écouler, on retourne à l'état E₁.

Sinon, on compare la valeur absolue de P₁ à une quatrième valeur de seuil prédéterminée S₅.

Si la valeur absolue de P₁ est supérieure ou égale à S₅, alors on retourne à l'état E₅.

Sinon, on compare la valeur absolue de P'₁ à une cinquième valeur de seuil prédéterminée S₆.

Si la valeur absolue de P'₁ est supérieure ou égale à S₆, alors on retourne à l'état E₅.

Sinon, on compare P₂ à une sixième valeur de seuil prédéterminée S₇.

Si la valeur de P₂ est inférieure ou égale à S₇, alors on retourne à l'état E₅.

Sinon, on observe l'état « active » ou « inactive » d'une fonction de détection de pendulage.

Si la fonction de détection de pendulage est inactive, on retourne à E₅.

Dans le cas contraire, on déclenche une attente ou temporisation de durée T₆, et on passe à l'état E₆, dans lequel on réalise un amortissement en condition de pendulage. On reste dans cet état E₆ pendant cette durée de temporisation T₆.

Au terme de la temporisation T₆, on compare la valeur absolue de P₁ à une septième valeur de seuil prédéterminée S₈.

Si la valeur absolue de P₁ est supérieure à S₈, alors on considère que le conducteur tient le volant, et on retourne à l'état initial E₀.

Dans le cas contraire, si la valeur absolue de P₁ est inférieure à S₈, alors on considère que le volant n'est toujours pas tenu, et on reste à l'état E₆, dans lequel on réalise un amortissement en condition de pendulage.

A titre d'exemple, les valeurs de seuil constantes utilisées dans le procédé qui vient d'être décrit peuvent être les suivantes :
- S₁ = 120°/s
- S₂ = 30°/s
- S₃ = 175°/s
- S₅ = 2,5 N.m
- S₇ = 70 km/h
- S₈ compris entre 2 et 2,5 N.m
- T₂ = 200 ms
- T₆ = 350 ms

On notera que les valeurs T₄, T₅ et S₆, dans l'exemple représenté, sont variables et calculées en fonction des paramètres P₁, P₂, P₃ notamment, par des algorithmes qui ne seront pas décrits ici. On précisera néanmoins que la valeur de T₄ est comprise entre 1 et 100 ms, et que la valeur de T₅ est comprise entre 10 et 130 ms.

La détermination séquentielle du mode de fonctionnement de la direction, telle qu'elle vient d'être décrite, assure une grande fiabilité de la détection d'un phénomène de pendulage.

Grâce à cette fiabilité accrue, le couple d'amortissement introduit répond réellement aux besoins de la situation. En d'autres termes, le procédé permet de ne pas dégrader inutilement l'agrément de conduite par une augmentation brusque et injustifiée du couple d'amortissement, et assure une pleine sécurité dans une situation d'urgence avec évitement puis lâché du volant.

## Revendications

1. Procédé de commande d'un moteur électrique d'un dispositif d'assistance électrique de direction de véhicule automobile, le moteur (15) étant prévu pour fournir un couple d'assistance au braquage, procédé dans lequel, à chaque instant:
- on calcule une valeur de consigne motrice (C₊) en fonction d'un premier ensemble (P₁, P₂) de paramètres de fonctionnement et/ou d'état du véhicule,
- on calcule une valeur de consigne d'amortissement (C₋) en fonction d'un deuxième ensemble (P₁, P₂, P₃) de paramètres de fonctionnement et/ou d'état du véhicule, et
- on calcule une valeur de consigne de couple d'assistance (C) résultant de la valeur de consigne motrice (C₊) et de la valeur de consigne d'amortissement (C₋),
- on détermine de façon séquentielle le mode de fonctionnement de la direction parmi un mode de fonctionnement normal et un mode de fonctionnement en pendulage, et on calcule la valeur de consigne d'amortissement (C_) à chaque instant, en fonction du mode déterminé, sélectivement au moyen de premières lois pré-enregistrées ou de secondes lois pré-enregistrées distinctes des premières,
**caractérisé en ce qu'**on détermine le mode de fonctionnement de la direction en observant l'évolution avec le temps d'un paramètre (P₃) significatif de la vitesse-volant, d'un paramètre (P₁) significatif du couple-volant, de la dérivée temporelle (P'₁) de ce dernier, et d'un paramètre (P₂) significatif de la vitesse du véhicule.

2. Procédé suivant la revendication 1, **caractérisé en ce qu'**on détermine que le mode de fonctionnement est par défaut le mode de fonctionnement normal, et qu'il est le mode de fonctionnement en pendulage pour une durée prédéterminée, dès lors qu'une fonction de détection de pendulage et activée, et que la séquence suivante d'événements est observée :
a) la valeur du paramètre (P₃) significatif de la vitesse-volant, est à un premier instant, en valeur absolue, supérieure à une première valeur de seuil (S₁) prédéterminée,
b) la valeur du paramètre (P₃) significatif de la vitesse-volant devient, à un deuxième instant postérieur au premier instant, en valeur absolue, inférieure à une deuxième valeur de seuil (S₂) prédéterminée,
c) à un troisième instant, dans un premier temps (T₂) prédéterminé à partir du deuxième instant, la valeur du paramètre (P₃) significatif de la vitesse-volant devient, en valeur absolue, supérieure à une troisième valeur de seuil (S₃) prédéterminée, et de signe différent de celui du même paramètre (P₃) au premier instant, et
d) après une attente (T₄) prédéterminée, à un quatrième instant dans un deuxième temps (T₅) prédéterminé à partir de la fin de ladite attente (T₄), les conditions suivantes sont toutes remplies :
- la valeur absolue du paramètre (P₁) significatif du couple-volant est inférieure à une quatrième valeur de seuil prédéterminée (S₅),
- la valeur absolue de la dérivée temporelle du paramètre (P₁) significatif du couple-volant est inférieure à une cinquième valeur de seuil prédéterminée (S₆), et
- la valeur du paramètre (P₂) significatif de la vitesse du véhicule est supérieure à une sixième valeur de seuil prédéterminée (S₇).

3. Dispositif d'assistance électrique de direction de véhicule automobile, comprenant un moteur électrique (15) prévu pour fournir un couple d'assistance au braquage, et un dispositif de commande (16) prévu pour délivrer au moteur (15) un signal de consigne de couple d'assistance (C) résultant d'une valeur de consigne motrice (C₊) et d'une valeur de consigne d'amortissement (C₋), ledit dispositif de commande (16) comportant
- des moyens principaux de calcul (31) qui calculent à chaque instant la valeur de consigne motrice (C₊) en fonction d'un premier ensemble (P₁, P₂) de paramètres de fonctionnement et/ou d'état du véhicule, et
- des moyens secondaires de calcul (32) qui calculent à chaque instant la valeur de consigne d'amortissement (C₋) en fonction d'un deuxième ensemble (P₁, P₂, P₃) de paramètres de fonctionnement et/ou d'état du véhicule,
- lesdits moyens secondaires de calcul (32) comprennent
- des premiers (41) et des seconds (42) moyens de calcul de la valeur de consigne d'amortissement (C₋), associés respectivement à un mode de fonctionnement normal et à un mode de fonctionnement en pendulage de la direction, et pouvant être activés de façon sélective pour calculer et délivrer ladite valeur de consigne d'amortissement (C₋), et
- des moyens de sélection (43), adaptés pour déterminer de façon séquentielle le mode de fonctionnement de la direction parmi le mode de fonctionnement normal et le mode de fonctionnement en pendulage, et pour activer à chaque instant, en fonction du mode déterminé, sélectivement les premiers (41) ou les seconds (42) moyens de calcul,
**caractérisé en ce que** ce que ledit deuxième ensemble de paramètres est constitué d'un paramètre (P₃) significatif de la vitesse-volant, d'un paramètre (P₁) significatif du couple-volant, d'un paramètre significatif de la dérivée temporelle (P'₁) de ce dernier, et d'un paramètre (P₂) significatif de la vitesse du véhicule.

## Claims

1. Method of controlling an electric motor of an electric motor vehicle steering assistance device, the motor (15) being provided to supply a turning assistance torque, a method in which, at each instant:
- a setpoint driving value (C₊) is calculated according to a first set (P₁, P₂) of vehicle operation and/or status parameters,
- a setpoint damping value (C-) is calculated according to a second set (P₁, P₂, P₃) of vehicle operation and/or status parameters, and
- a setpoint assistance torque value (C) is calculated, resulting from the setpoint driving value (C₊) and from the setpoint damping value (C₋),
- the steering operation mode is determined sequentially from a normal operating mode and a pendulum operating mode, and the setpoint damping value (C-) is calculated at each instant, according to the determined mode, selectively by means of first prestored laws or second prestored laws separate from the first,
**characterized in that** the steering operation mode is determined by observing the trend over time of a parameter (P₃) indicative of the steering wheel speed, a parameter (P₁) indicative of the steering wheel torque, of the time drift (P'₁) of the latter, and of a parameter (P₂) indicative of the speed of the vehicle.

2. Method according to Claim 1, **characterized in that** it is determined that the operating mode is by default the normal operating mode, and that it is the pendulum operating mode for a predetermined duration, provided that a pendulum detection function is activated, and that the following sequence of events is observed:
a) the value of the parameter (P₃) indicative of the steering wheel speed is, at a first instant, as an absolute value, greater than a first predetermined threshold (S₁),
b) the value of the parameter (P₃) indicative of the steering wheel speed becomes, at a second instant later than the first instant, as an absolute value, less than a second predetermined threshold value (S₂),
c) at a third instant, with a first predetermined time (T₂) from the second instant, the value of the parameter (P₃) indicative of the steering wheel speed becomes, as an absolute value, greater than a third predetermined threshold value (S₃), and with a different sign from that of the first parameter (P₃) at the first instant, and
d) after a predetermined waiting time (T₄), at a fourth instant within a second predetermined time (T₅) from the end of said waiting time (T₄), the following conditions are all satisfied:
- the absolute value of the parameter (P₁) indicative of the steering wheel torque is less than a fourth predetermined threshold value (S₅),
- the absolute value of the time drift of the parameter (P₁) indicative of the steering wheel torque is less than a fifth predetermined threshold value (S₆), and
- the value of the parameter (P₂) indicative of the speed of the vehicle is greater than a sixth predetermined threshold value (S₇).

3. Motor vehicle electric steering assistance device, comprising an electric motor (15) provided to supply a turning assistance torque, and a control device (16) provided to deliver to the motor (15) a setpoint assistance torque signal (C) resulting from a setpoint driving value (C₊) and a setpoint damping value (C₋), said control device (16) comprising
- main computation means (31) that compute, at each instant, the setpoint driving value (C₊) according to a first set (P₁, P₂) of vehicle operation and/or status parameters, and
- second computation means (32) that compute, at each instant, the setpoint damping value (C-) according to a second set (P₁, P₂, P₃) of vehicle operation and/or status parameters,
- said secondary computation means (32) comprise
- first (41) second (42) means of computing the setpoint damping value (C₋), respectively associated with a normal operating mode and a pendulum operating mode of the steering, and being able to be activated selectively to compute and deliver said setpoint damping value (C₋), and
- selection means (43), suitable for sequentially determining the steering operation mode from the normal operating mode and the pendulum operating mode, and for activating at each instant, according to the determined mode, selectively the first (41) or second (42) computation means,
**characterized in that** said second set of parameters consists of a parameter (P₃) indicative of the steering wheel speed, a parameter (P₁) indicative of the steering wheel torque, a parameter indicative of the time drift (P'₁) of the latter, and a parameter (P₂) indicative of the speed of the vehicle.

## Patentansprüche

1. Verfahren zur Steuerung eines Elektromotors einer elektrischen Servolenkvorrichtung eines Kraftfahrzeugs, wobei der Motor (15) dazu vorgesehen ist, ein Lenkhilfsmoment zu liefern, wobei bei dem Verfahren zu jedem Zeitpunkt:
- ein Antriebssollwert (C₊) als Funktion eines ersten Satzes (P₁, P₂) von Betriebs- und/oder Zustandsparametern des Fahrzeugs berechnet wird,
- ein Dämpfungssollwert (C-) als Funktion eines zweiten Satzes (P₁, P₂, P₃) von Betriebs- und/oder Zustandsparametern des Fahrzeugs berechnet wird, und
- ein Hilfsmomentsollwert (C), der sich aus dem Antriebssollwert (C₊) und dem Dämpfungssollwert (C₋) ergibt, berechnet wird,
- der Lenkungsbetriebsmodus sequentiell unter zwischen einem normalen Betriebsmodus und einem Pendelbetriebsmodus bestimmt wird und der Dämpfungssollwert (C-) zu jedem Zeitpunkt als Funktion des bestimmten Modus gezielt mittels erster vorgespeicherter Gesetze oder zweiter vorgespeicherter, von den ersten Gesetzen verschiedener, Gesetze, berechnet wird,
**dadurch gekennzeichnet, dass** der Lenkungsbetriebsmodus durch Beobachtung des zeitlichen Verlaufs eines die Lenkradgeschwindigkeit anzeigenden Parameters (P₃), eines das Lenkradmoment anzeigenden Parameters (P₁), der zeitlichen Ableitung (P'₁) dieses letzteren und eines die Geschwindigkeit des Fahrzeugs anzeigenden Parameters (P₂) bestimmt wird.

2. Verfahren nach Anspruch 1, **dadurch gekennzeichnet, dass** bestimmt wird, dass der Betriebsmodus standardmäßig der normale Betriebsmodus ist und dass er für eine vorbestimmte Dauer der Pendelbetriebsmodus ist, sobald eine Pendelerfassungsfunktion aktiviert ist und die folgende Abfolge von Ereignissen beobachtet wird:
a) der Wert des die Lenkradgeschwindigkeit anzeigenden Parameters (P₃) ist zu einem ersten Zeitpunkt als Absolutwert größer als ein erster, vorbestimmter Schwellwert (S₁),
b) der Wert des die Lenkradgeschwindigkeit anzeigenden Parameters (P₃) wird zu einem zweiten Zeitpunkt, der später als der erste Zeitpunkt erfolgt, als Absolutwert kleiner als ein zweiter, vorbestimmter Schwellwert (S₂),
c) zu einem dritten Zeitpunkt innerhalb einer ersten vorbestimmten Zeitspanne (T₂) ab dem zweiten Zeitpunkt wird der Wert des die Lenkradgeschwindigkeit anzeigenden Parameters (P₃) als Absolutwert größer als ein dritter, vorbestimmter Schwellwert (S₁) und mit einem anderen Vorzeichen als das des gleichen Parameters (P₃) zu dem ersten Zeitpunkt, und
d) nach einer vorbestimmten Wartezeit (P₄) sind zu einem vierten Zeitpunkt innerhalb einer zweiten vorbestimmten Zeitspanne (T₅) ab dem Ende der Wartezeit (T₄) die folgenden Bedingungen alle erfüllt:
- der Absolutwert des das Lenkradmoment anzeigenden Parameters (P₁) ist kleiner als ein vierter, vorbestimmter Schwellwert (S₅),
- der Absolutwert der zeitlichen Ableitung des das Lenkradmoment anzeigenden Parameters (P₁) ist kleiner als ein fünfter vorbestimmter Schwellwert (S₆), und
- der Wert des die Geschwindigkeit des Fahrzeugs anzeigenden Parameters (P₂) ist größer als ein sechster, vorbestimmter Schwellwert (S₇).

3. Elektrische Servolenkvorrichtung für ein Kraftfahrzeug, umfassend einen elektrischen Motor (15), der zur Lieferung eines Lenkhilfsmoments vorgesehen ist, und eine Steuervorrichtung (16), die zur Zuführung eines Sollhilfsmomentsignals (C), das sich aus einem Antriebssollwert (C₊) und einem Dämpfungssollwert (C-) ergibt, vorgesehen ist, wobei die Steuervorrichtung (16)
- Hauptrechenmittel (31), die zu jedem Zeitpunkt den Antriebssollwert (C₊) als Funktion eines ersten Satzes (P₁, P₂) von Betriebs- und/oder Zustandsparametern des Fahrzeugs berechnen, und
- Sekundärrechenmittel (32), die zu jedem Zeitpunkt den Dämpfungssollwert (C-) als Funktion eines zweiten Satzes (P₁, P₂, P₃) von Betriebs- und/oder Zustandsparametern berechnen,
aufweist,
- wobei die Sekundärrechenmittel (32)
- erste (41) und zweite (42) Mittel zur Berechnung des Dämpfungssollwerts (C-) aufweisen, die jeweils einem normalen Betriebsmodus und einem Pendelbetriebsmodus der Lenkung zugeordnet sind und gezielt aktiviert werden können, um den Dämpfungssollwert (C₋) zu berechnen und zuzuführen, und
- Wählmittel (43), die dazu ausgeführt sind, den Lenkungsbetriebsmodus sequentiell zwischen einem normalen Betriebsmodus und einem Pendelbetriebsmodus zu bestimmen und zu jedem Zeitpunkt als Funktion des bestimmten Modus gezielt die ersten und die zweiten Rechenmittel (42) zu aktivieren,
umfassen,
**dadurch gekennzeichnet, dass** der zweite Satz von Parametern durch einen die Lenkradgeschwindigkeit anzeigenden Parameter (P₃), einen das Lenkradmoment anzeigenden Parameter (P₁), die zeitliche Ableitung dieses letzteren anzeigenden Parameter (P'₁) und einen die Geschwindigkeit des Fahrzeugs anzeigenden Parameters (P₂) gebildet wird.
